# EUROPEAN PATENT APPLICATION

(11) **EP 4 369 793 A1**
(43) Date of publication of application: **15.05.2024**
(21) Application number: 22836797.5
(22) Date of filing: 30.06.2022
(51) Int. Cl.: H04W 40/12, H04W 40/22

(54) **RELAY SELECTION METHOD, RELAY INFORMATION TRANSMISSION METHOD AND APPARATUS, AND TERMINAL**

(30) Priority: 06.07.2021 CN 202110762976
(71) Applicant: Vivo Mobile Communication Co., Ltd., Dongguan, Guangdong 523863 (CN)
(72) Inventor: WANG, Wen, Dongguan, Guangdong 523863 (CN); KE, Xiaowan, Dongguan, Guangdong 523863 (CN); WU, Xiaobo, Dongguan, Guangdong 523863 (CN); XIE, Zhenhua, Dongguan, Guangdong 523863 (CN)
(74) Representative: Lavoix
(86) International application number: PCT/CN2022/102740
(87) International publication number: WO 2023/280044

(57) **Abstract**

This application discloses a relay selection method and apparatus, a relay information transmission method and apparatus, and a terminal, and pertains to the technical field of communications. The method in the embodiments of this application includes: receiving, by a remote terminal, first information sent by a relay terminal, where the first information includes at least one of a relay hop count N and quality of service (QoS) information of the relay terminal, N represents an N^{th} hop of the relay terminal in a relay link, and N is a positive integer; and performing, by the remote terminal, relay terminal selection based on the first information.

## Description

### CROSS-REFERENCE TO RELATED APPLICATIONS

This application claims priority to Chinese Patent Application No. 202110762976.2, filed on July 06, 2021 in China, which is incorporated herein by reference in its entirety.

### TECHNICAL FIELD

This application relates to the technical field of communications, and in particular, to a relay selection method and apparatus, a relay information transmission method and apparatus, and a terminal.

### BACKGROUND

Currently, the scene of user equipment (User Equipment, UE, also referred to as a terminal)-to-network relay (UE-to-Network relay) only involves one-hop relay and does not involve selection of multi-hop relay. The introduction of multi-hop relay can effectively expand the network coverage and further make up for a blind area of network coverage. However, there is no relevant solution on how to select a corresponding relay for a multi-hop relay scenario.

### SUMMARY

Embodiments of this application provide a relay selection method and apparatus, a relay information transmission method and apparatus, and a terminal, to solve the problem of how to select a relay terminal for a multi-hop relay scenario.

According to a first aspect, a relay selection method is provided, including:
receiving, by a remote terminal, first information sent by a relay terminal, where the first information includes at least one of a relay hop count N and quality of service (Quality of Service, QoS) information of the relay terminal, N represents an N^{th} hop of the relay terminal in a relay link, and N is a positive integer; and
performing, by the remote terminal, relay terminal selection based on the first information.

According to a second aspect, a relay information transmission method is provided, including:
sending, by a first relay terminal, first information, where
the first information includes at least one of following:
   a relay hop count N of the first relay terminal, where N represents an N^{th} hop of the first relay terminal in a relay link, and N is a positive integer; and
   quality of service (QoS) information.

According to a third aspect, a relay selection apparatus is provided, applied to a remote terminal and including:
a first transceiver module, configured to receive first information sent by a relay terminal, where the first information includes at least one of a relay hop count N and quality of service (QoS) information of the relay terminal, N represents an N^{th} hop of the relay terminal in a relay link, and N is a positive integer; and
a first processing module, configured to perform relay terminal selection based on the first information.

According to a fourth aspect, a relay information transmission apparatus is provided, applied to a first relay terminal and including:
a second transceiver module, configured to send first information, where the first information includes at least one of following:
   a relay hop count N of the first relay terminal, where N represents an N^{th} hop of the first relay terminal in a relay link, and N is a positive integer; and
   quality of service (QoS) information.

According to a fifth aspect, a terminal is provided. The terminal includes a processor, a memory, and a program or an instruction stored in the memory and executable on the processor, where the program or the instruction is executed by the processor to implement steps of the method according to the first aspect or the second aspect.

According to a sixth aspect, a terminal is provided, including a processor and a communications interface, where the communications interface is used to: receive first information sent by a relay terminal, where the first information includes at least one of a relay hop count N and quality of service (QoS) information of the relay terminal, N represents an N^{th} hop of the relay terminal in a relay link, and N is a positive integer; and the processor is configured to perform relay terminal selection based on the first information; or the communications interface is configured to send first information, where the first information includes at least one of following:
a relay hop count N of the first relay terminal, where N represents an N^{th} hop of the first relay terminal in a relay link, and N is a positive integer; and
quality of service (QoS) information.

According to a seventh aspect, a readable storage medium is provided, where the readable storage medium stores a program or an instruction, and when the program or the instruction is executed by a processor, steps of the method according to the first aspect or the second aspect are implemented.

According to an eighth aspect, a chip is provided, where the chip includes a processor and a communications interface, the communications interface is coupled to the processor, and the processor is configured to run a program or an instruction, to implement steps of the method according to the first aspect or the second aspect.

According to a ninth aspect, a computer program product is provided, where the computer program product is stored in a non-transitory storage medium, and the computer program product is executed by at least one processor to implement steps of the method according to the first aspect or the second aspect.

According to a tenth aspect, a communications device is provided, where the communications device is configured to perform the method according to the first aspect or the second aspect.

In the embodiments of this application, the remote terminal receives the first information sent by the relay terminal, where the first information includes at least one of a relay hop count N and quality of service (QoS) information of the relay terminal. The remote terminal can identify the role of the relay terminal (the intermediate relay or the anchor relay) by using the first information, and determine whether to select the relay terminal, thus realizing selection of the relay terminal in a multi-hop relay scenario.

### BRIEF DESCRIPTION OF DRAWINGS

FIG 1 is a structural diagram of a communications system to which embodiments of this application can be applied;
FIG 2 is a schematic flowchart of a relay selection method according to an embodiment of this application;
FIG 3 is a schematic flowchart of a relay information transmission method according to an embodiment of this application;
FIG 4 is a first schematic interaction diagram of a relay selection method according to an embodiment of this application;
FIG 5 is a second schematic interaction diagram of a relay selection method according to an embodiment of this application;
FIG 6 is a schematic diagram of modules of a relay selection apparatus according to an embodiment of this application;
FIG 7 is a schematic diagram of modules of a relay information transmission apparatus according to an embodiment of this application;
FIG 8 is a structural block diagram of a communications device according to an embodiment of this application; and
FIG 9 is a structural block diagram of a terminal according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, and these technologies can also be applied to an application other than an NR system application, for example, a 6^{th} generation (6^{th} Generation, 6G) communications system.

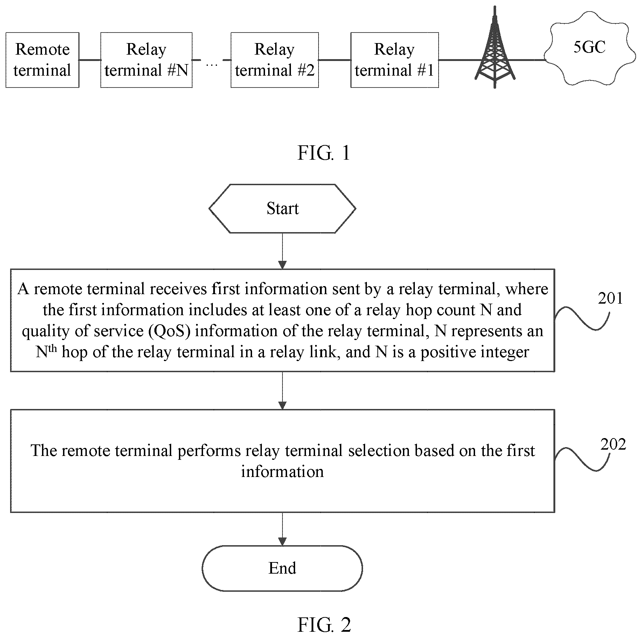

FIG 1 shows a multi-relay scenario. In this scenario, a remote terminal (Remote UE) is connected to the core network (5GC) through a plurality of relay terminals (Relay UE), such as Relay UE#1, Relay UE#2, ..., Relay UE#n. The remote UE or the relay UE may be referred to as a terminal device or user equipment (User Equipment, UE), or may be a terminal side device such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (vehicle user equipment, VUE), or pedestrian user equipment (Pedestrian User Equipment, PUE). The wearable device includes a smart watch, a bracelet, a headset, glasses, or the like. It should be noted that a specific type of the terminal is not limited in this embodiment of this application.

The following describes in detail the relay selection method provided in the embodiments of this application through some embodiments and application scenarios thereof with reference to the accompanying drawings.

As shown in FIG 2, an embodiment of this application provides a relay selection method, including following steps.

Step 201: A remote terminal receives first information sent by a relay terminal, where the first information includes at least one of a relay hop count N and quality of service (QoS) information of the relay terminal, N represents an N^{th} hop of the relay terminal in a relay link, and N is a positive integer.

Specifically, the first information may be carried by using a UE-to-network relay discovery announcement message (UE-to-Network Relay Discovery Announcement message) or a UE-to-network relay discovery response message (UE-to-Network Relay Discovery Response message).

Herein, the remote terminal receives first information sent by at least one relay terminal. The first information sent by each relay terminal can be used to identify a relay role of the relay terminal, for example, an anchor relay or an intermediate relay. Referring to FIG 1, Relay UE#1 (the relay connected to a base station) is the anchor relay, and Relay UE#2 to Relay UE#n are intermediate relays. Specifically, when N is 1, it indicates that the relay terminal is the anchor relay, and when N is greater than 1, it indicates that the relay terminal is the intermediate relay.

Optionally, the QoS information includes at least one of following:
delay information between the relay terminal and an anchor user plane function (User Plane Function, UPF), where the delay information can be represented by using a packet delay budget (Packet Delay Budget, PDB);
packet error rate information between the relay terminal and an anchor UPF, where the packet error rate information can be represented by using a packet error rate (Packet Error Rate, PER);
packet loss rate information between the relay terminal and an anchor UPF;
guaranteed bit rate information between the relay terminal and an anchor UPF, where the guaranteed bit rate information can be represented by using a guaranteed bit rate (Guaranteed Bit Rate, GBR); and
maximal bit rate information between the relay terminal and a UPF, where the maximal bit rate information can be represented by using a maximal bit rate (Maximal Bit Rate, MBR).

The anchor UPF refers to a UPF connected to a data network.

Step 202: The remote terminal performs relay terminal selection based on the first information.

In this step, the remote terminal identifies, based on first information sent by each relay terminal, a role of the relay terminal, and then determines whether to select the relay terminal.

In this embodiment of this application, the remote terminal receives the first information sent by the relay terminal, where the first information includes at least one of a relay hop count N and quality of service (QoS) information of the relay terminal. The remote terminal can identify the role of the relay terminal (the intermediate relay or the anchor relay) by using the first information, and determine whether to select the relay terminal, thus realizing selection of the relay terminal in a multi-hop relay scenario.

Optionally, there are at least two pieces of first information, each of the pieces of first information corresponds to a relay terminal, and each of the pieces of first information includes at least one first parameter, the first parameter may include at least one of following: a relay hop count; and a delay between the relay terminal and the anchor UPF, then;
the performing, by the remote terminal, relay terminal selection based on the first information includes:
determining, by the remote terminal based on first parameters respectively corresponding to all pieces of first information, a target relay terminal corresponding to a first target minimum parameter, where the first target minimum parameter is a first parameter with a minimum parameter value among a plurality of the first parameters, where
the first target minimum parameter includes at least one of following:
   a minimum relay hop count; and
   a minimum delay between the relay terminal and the anchor UPF.

As a specific implementation, the remote terminal receives first information sent by a first relay terminal and first information sent by a second relay terminal. In the first information sent by the first relay terminal, a relay hop count N is 1, and a delay between the relay terminal and the anchor user plane function (UPF) is S1. In the first information sent by the second relay terminal, a relay hop count N is 2, and a delay between the relay terminal and the anchor user plane function (UPF) is S2. S2 is greater than S1, and the remote terminal may select the first relay terminal as the target relay terminal.

Optionally, the performing, by the remote terminal, relay terminal selection based on the first information includes:
performing, by the remote terminal, relay terminal selection based on the first information and second information, where the second information is used to indicate a selection condition of the relay terminal, where
the second information is configured or pre-configured by a network side for the remote terminal.

Optionally, the second information includes at least one of following:
a maximal relay hop count, where the maximal relay hop count is a maximal hop count corresponding to a relay terminal that is able to be accepted by the remote terminal; and
a maximal QoS parameter value corresponding to the QoS information.

Optionally, a maximal QoS parameter value corresponding to the QoS information includes at least one of following:
information about a maximal tolerable delay of the remote terminal;
information about a maximal tolerable packet error rate of the remote terminal;
information about a maximal tolerable packet loss rate of the remote terminal;
information about a maximal tolerable guaranteed bit rate of the remote terminal; and
information about a maximal tolerable bit rate of the remote terminal.

Optionally, the performing relay terminal selection based on the first information and second information includes at least one of following:
in a case that the second information includes the maximal relay hop count, selecting a relay terminal that sends first target information, where the first target information is first information that meets a first condition, and the first condition is that the relay hop count N in the first information is less than or equal to the maximal relay hop count; and
in a case that the second information includes the maximal QoS parameter value, selecting a relay terminal that sends second target information, where the second target information is first information that meets a second condition, and the second condition is that the QoS parameter value in the first information is less than or equal to the maximal QoS parameter value.

Optionally, the second information is associated with at least one of following:
an application identifier or a service type, that is, the second information is applied to a specific service or application; and
a relay service code (relay service code), that is, the second information is applied to a specific relay service code.

Optionally, the performing, by the remote terminal, relay terminal selection based on the first information and second information includes:
in a case that the second information is associated with at least one of a target application identifier, a target service type, and a target relay service code, performing, by the remote terminal, relay terminal selection based on the first information and the second information.

Herein, the target application identifier, the target service type, and the target relay service code can be pre-configured by a network or specified by a protocol.

In this embodiment of this application, the remote terminal receives the first information sent by the relay terminal, where the first information includes at least one of a relay hop count N and quality of service (QoS) information of the relay terminal. The remote terminal can identify the role of the relay terminal (the intermediate relay or the anchor relay) by using the first information, and determine whether to select the relay terminal, thus realizing selection of the relay terminal in a multi-hop relay scenario.

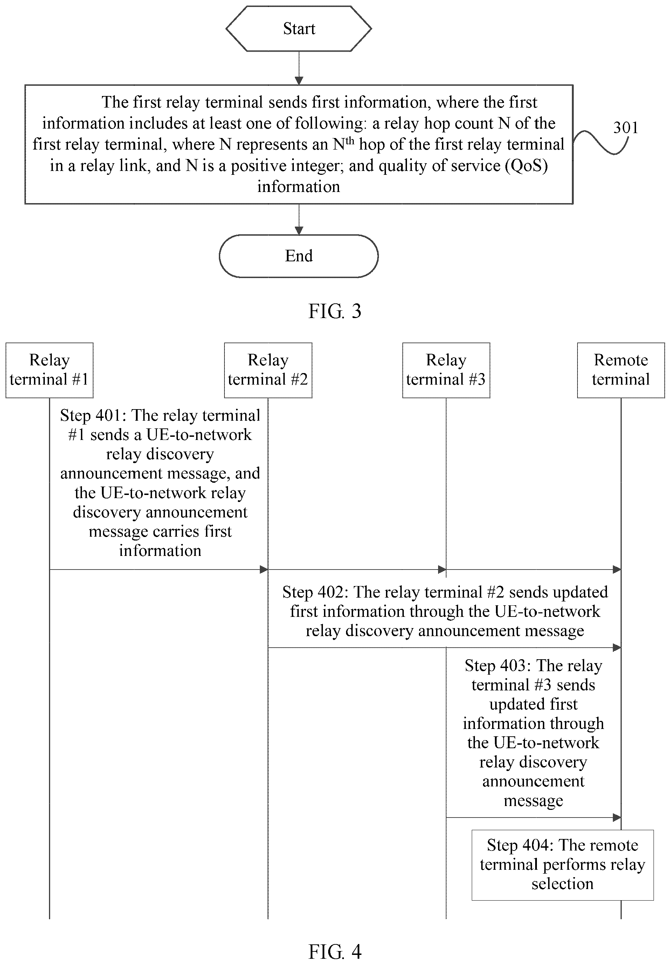

As shown in FIG 3, an embodiment of this application provides a relay information transmission method, including following steps.

Step 301: A first relay terminal sends first information.

The first information includes at least one of following:
a relay hop count N of the first relay terminal, where N represents an N^{th} hop of the first relay terminal in a relay link, and N is a positive integer; and
quality of service (QoS) information.

In this embodiment of this application, the first relay terminal may be any relay terminal in the relay link. The first information may be carried by using a UE-to-network relay discovery announcement message (UE-to-Network Relay Discovery Announcement message) or a UE-to-network relay discovery response message (UE-to-Network Relay Discovery Response message).

In this embodiment of this application, the first relay terminal sends the first information, so that the remote terminal can identify the role of the first relay terminal (the anchor relay or the intermediate relay) based on the first information, and determine whether to select the relay terminal. In addition, other relay terminals can determine whether to perform a next hop relay role of the first relay terminal based on the first information of the first relay terminal.

Optionally, the QoS information includes at least one of following:
delay information between the first relay terminal and an anchor user plane function (UPF);
packet error rate information between the first relay terminal and an anchor UPF;
packet loss rate information between the first relay terminal and an anchor UPF;
guaranteed bit rate information between the first relay terminal and an anchor UPF; and
maximal bit rate information between the first relay terminal and an anchor UPF.

The QoS information is the same as the QoS information in the remote terminal side method embodiment, and details are not described herein again.

Optionally, before the sending, by a first relay terminal, first information, the method further includes:
receiving first information from a second relay terminal, where the second relay terminal includes a relay terminal corresponding to an N1 hop before the first relay terminal, and N1 is a positive integer greater than or equal to 1; and
performing, by the first relay terminal, a first operation based on the first information of the second relay terminal, where
the first operation includes at least one of following:
   increasing the relay hop count of the first relay terminal by 1; and
   updating the QoS information of the first relay terminal.

Further, optionally, the updating the QoS information includes at least one of following:
performing, by the first relay terminal, round-trip time (Round-Trip Time, RTT) measurement through the relay link and the anchor UPF, and updating a delay value in the QoS information based on a measurement result; and
performing, by the first relay terminal, target QoS parameter measurement through the relay link and the anchor UPF, and updating a target QoS parameter in the QoS information based on a measurement result, where the target QoS parameter includes at least one of a packet error rate and a packet loss rate.

Optionally, the performing, by the first relay terminal, a first operation based on the first information of the second relay terminal includes:
in a case that the first relay terminal determines, based on third information and the first information of the second relay terminal, the first relay terminal as a next hop relay of the second relay terminal, performing, by the first relay terminal, the first operation, where
the third information is used to indicate a relay discovery termination condition, and the third information is configured or pre-configured by a network side for the first relay terminal.

Optionally, the third information includes at least one of following:
a maximal relay hop count; and
a maximal QoS parameter value corresponding to the QoS information.

The maximal QoS parameter value includes at least one of following:
information about a maximal tolerable delay between a relay terminal and an anchor UPF;
information about a maximal tolerable packet error rate between a relay terminal and an anchor UPF;
information about a maximal tolerable packet loss rate between a relay terminal and an anchor UPF;
information about a maximal tolerable guaranteed bit rate between a relay terminal and an anchor UPF; and
information about a maximal tolerable bit rate between a relay terminal and an anchor UPF.

In this embodiment of this application, the relay discovery termination condition is used for the first relay terminal to determine whether to continue to perform a relay discovery process, that is, to play a next hop relay role. When the relay hop count in the first information of the second relay terminal is greater than or equal to the maximal relay hop count, and/or the QoS parameter value corresponding to the QoS information in the first information of the second relay terminal is greater than or equal to a corresponding maximal QoS parameter value, the first relay terminal does not select the second relay terminal as a last hop relay terminal.

For example, if the maximal relay hop count is 2, and the relay hop count in the first information of the second relay terminal is 2, the first relay terminal will no longer play the next hop relay role.

Optionally, the third information is associated with at least one of following:
an application identifier or a service type, that is, the third information is applied to a specific service or application; and
a relay service code, that is, the third information is applied to a specific relay service code.

Optionally, there are at least two pieces of first information, each of the pieces of first information corresponds to a second relay terminal, and each of the pieces of first information includes at least one second parameter, then
the performing, by the first relay terminal, a first operation based on the first information of the second relay terminal includes:
determining, by the first relay terminal based on second parameters respectively corresponding to all pieces of first information, a second target relay terminal corresponding to a second target minimum parameter, where the second target minimum parameter is a second parameter with a minimum parameter value among a plurality of the second parameters; and
performing, by the first relay terminal, the first operation based on the first information of the second target relay terminal, where
the second target minimum parameter includes at least one of following:
   a minimum relay hop count; and
   a minimum delay between the relay terminal and the anchor UPF.

For example, the second relay terminal includes a relay terminal #1 and a relay terminal #2, a relay hop count in first information of the relay terminal #1 is 1, a delay between the relay terminal and the anchor UPF is M1, a relay hop count in first information of the relay terminal #2 is 2, a delay between the relay terminal and the anchor UPF is M2, and M2 is greater than M1. In this case, the first relay terminal can select the relay terminal #1 as the second target relay terminal.

Optionally, in a case that the first relay terminal determines, based on third information and the first information of the second relay terminal, the first relay terminal as a next hop relay of the second relay terminal, the performing, by the first relay terminal, the first operation includes:
in a case that the first relay terminal determines, based on the third information and the first information of the second relay terminal, the first relay terminal as a next hop relay of the second relay terminal, and the third information is associated with at least one of a target application identifier, a target service type, and a target relay service code, performing, by the first relay terminal, the first operation.

In this embodiment of this application, the first relay terminal sends the first information, so that the remote terminal can identify the role of the first relay terminal (the anchor relay or the intermediate relay) based on the first information, and determine whether to select the relay terminal. In addition, other relay terminals can determine whether to perform a next hop relay role of the first relay terminal based on the first information of the first relay terminal.

The following describes the relay selection method in this application with reference to specific embodiments.

Embodiment 1: Model A (model A) relay discovery and selection in a multi-hop relay scenario (it is assumed that a relay terminal #1, a relay terminal #2, and a relay terminal #3 are included).

As shown in FIG 4, following steps are included.

Step 401: The relay terminal #1 (the anchor relay) executes a U2N relay discovery process of in the model A, the relay terminal #1 sends a UE-to-network relay discovery announcement message (UE-to-Network Relay Discovery Announcement message), and the UE-to-network relay discovery announcement message carries first information, where the first information includes at least one of following:
an index (index), indicating a hop count of a current relay terminal, for example, index=1, indicating an anchor relay or a first hop relay; and
a QoS parameter value, including at least one of PDB, PER, GBR, and MBR.

Step 402: The relay terminal #2 (the intermediate relay or a second hop relay) receives the UE-to-network relay discovery announcement message sent by the relay terminal #1, determines whether to be the next hop relay based on the first information in the UE-to-network relay discovery announcement message or based on the first information and the third information, performs at least one of following when determining to be the next hop relay, and sends updated first information through the UE-to-network relay discovery announcement message:
index+1, namely, index=index+1, and in this case, index=2; and
updating the QoS parameter value.

Step 403: The relay terminal #3 (the intermediate relay or a third hop relay) receives the UE-to-network relay discovery announcement message sent by the relay terminal #2, determines whether to be the next hop relay based on the first information in the UE-to-network relay discovery announcement message or based on the first information and the third information, performs at least one of following when determining to be the next hop relay, and sends updated first information through the UE-to-network relay discovery announcement message:
index+1, namely, index=index+1, and in this case, index=2; and
updating the QoS parameter value.

Optionally, the relay terminal #3 may also receive both the UE-to-network relay discovery announcement message sent by the relay terminal #1 and the UE-to-network relay discovery announcement message sent by the relay terminal #2. In this case, the relay terminal #3 preferentially selects a relay terminal corresponding to a minimum index in the first information.

Step 404: The remote UE receives the first information, and selects a relay terminal based on the first information or based on the first information and the second information.

A specific selection process of the remote UE has been described in detail in the foregoing embodiment, and details are not described herein again.

Embodiment 2: Model B (model B) relay discovery and selection in a multi-hop relay scenario (it is assumed that a relay terminal #1, a relay terminal #2, and a relay terminal #3 are included).

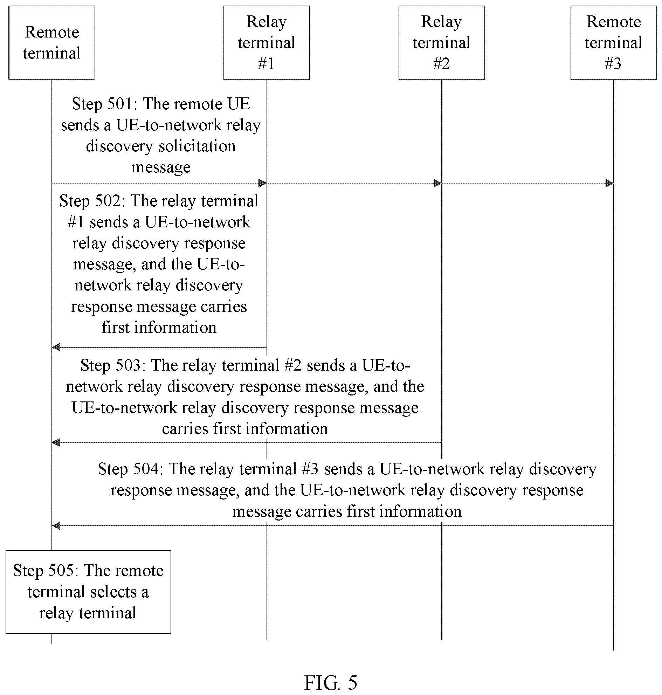

As shown in FIG 5, following steps are included.

Step 501: The remote terminal executes a model B relay sending process, and the remote UE sends a UE-to-network relay discovery solicitation message (UE-to-Network Relay Discovery Solicitation message).

Step 502: After receiving the UE-to-network relay discovery solicitation message sent by the remote terminal, the relay terminal #1 (the anchor relay) sends a UE-to-network relay discovery response message (UE-to-Network Relay Discovery Response message) to the remote terminal, and the UE-to-network relay discovery response message carries the first information.

The first information includes at least one of following:
an index (index), indicating a hop count of a current relay terminal, for example, index=1, indicating an anchor relay or a first hop relay; and
a QoS parameter value, including at least one of PDB, PER, GBR, and MBR.

Step 503: After receiving the UE-to-network relay discovery solicitation message sent by the remote terminal, the relay terminal #2 (the intermediate relay or second hop relay) sends a UE-to-network relay discovery response message (UE-to-Network Relay Discovery Response message) to the remote terminal, and the UE-to-network relay discovery response message carries the first information.

The first information includes at least one of following:
an index (index), indicating a hop count of a current relay terminal, for example, index=2, indicating a second hop relay; and
a QoS parameter value, including at least one of PDB, PER, GBR, and MBR.

Step 504: After receiving the UE-to-network relay discovery solicitation message sent by the remote terminal, the relay terminal #3 (the intermediate relay or third hop relay) sends a UE-to-network relay discovery response message (UE-to-Network Relay Discovery Response message) to the remote terminal, and the UE-to-network relay discovery response message carries the first information.

The first information includes at least one of following:
an index (index), indicating a hop count of a current relay terminal, for example, index=3, indicating a third hop relay; and
a QoS parameter value, including at least one of PDB, PER, GBR, and MBR.

Step 505: The remote terminal receives the first information, and selects a relay terminal based on the first information or based on the second information and the first information.

A specific selection process of the remote UE has been described in detail in the foregoing embodiment, and details are not described herein again.

In this embodiment of this application, the relay terminal sends the first information, so that the remote terminal can identify the role of the first relay terminal (the anchor relay or the intermediate relay) based on the first information, and determine whether to select the relay terminal. In addition, other relay terminals can determine whether to perform a next hop relay role of the first relay terminal based on the first information of the first relay terminal.

It should be noted that an execution subject of the relay selection method according to an embodiment of this application may be a relay selection apparatus, or a control module for performing the relay selection method in the relay selection apparatus. In the embodiments of this application, the relay selection apparatus according to an embodiment of this application is described by using an example in which the relay selection apparatus performs the relay selection method.

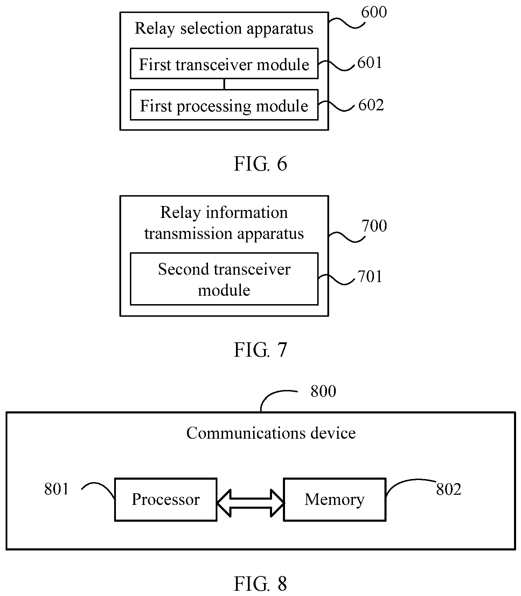

As shown in FIG 6, an embodiment of this application provides a relay selection apparatus 600, including:
a first transceiver module 601, configured to receive first information sent by a relay terminal, where the first information includes at least one of a relay hop count N and quality of service (QoS) information of the relay terminal, N represents an N^{th} hop of the relay terminal in a relay link, and N is a positive integer; and
a first processing module 602, configured to perform relay terminal selection based on the first information.

Optionally, the QoS information includes at least one of following:
delay information between the relay terminal and an anchor user plane function (UPF);
packet error rate information between the relay terminal and an anchor UPF;
packet loss rate information between the relay terminal and an anchor UPF;
guaranteed bit rate information between the relay terminal and an anchor UPF; and
maximal bit rate information between the relay terminal and an anchor UPF.

Optionally, there are at least two pieces of first information, each of the pieces of first information corresponds to a relay terminal, and each of the pieces of first information includes at least one first parameter, then;
the first processing module includes:
a first selection submodule, configured to determine, based on first parameters respectively corresponding to all pieces of first information, a target relay terminal corresponding to a first target minimum parameter, where the first target minimum parameter is a first parameter with a minimum parameter value among a plurality of the first parameters, where
the first target minimum parameter includes at least one of following:
   a minimum relay hop count; and
   a minimum delay between the relay terminal and the anchor UPF.

Optionally, the first processing module is configured to perform relay terminal selection based on the first information and second information, and the second information is used to indicate a selection condition of the relay terminal, where
the second information is configured or pre-configured by a network side for the remote terminal.

Optionally, the second information includes at least one of following:
a maximal relay hop count, where the maximal relay hop count is a maximal hop count corresponding to a relay terminal that is able to be accepted by the remote terminal; and
a maximal QoS parameter value corresponding to the QoS information.

Optionally, the first processing module is configured to perform at least one of following:
in a case that the second information includes the maximal relay hop count, selecting a relay terminal that sends first target information, where the first target information is first information that meets a first condition, and the first condition is that the relay hop count N in the first information is less than or equal to the maximal relay hop count; and
in a case that the second information includes the maximal QoS parameter value, selecting a relay terminal that sends second target information, where the second target information is first information that meets a second condition, and the second condition is that the QoS parameter value in the first information is less than or equal to the maximal QoS parameter value.

Optionally, a maximal QoS parameter value corresponding to the QoS information includes at least one of following:
information about a maximal tolerable delay of the remote terminal;
information about a maximal tolerable packet error rate of the remote terminal;
information about a maximal tolerable packet loss rate of the remote terminal;
information about a maximal tolerable guaranteed bit rate of the remote terminal; and
information about a maximal tolerable bit rate of the remote terminal.

Optionally, the second information is associated with at least one of following:
an application identifier or a service type; and
a relay service code.

Optionally, the first processing module is configured to: in a case that the second information is associated with at least one of a target application identifier, a target service type, and a target relay service code, perform relay terminal selection based on the first information and the second information.

In this embodiment of this application, the first information sent by the relay terminal is received, where the first information includes at least one of a relay hop count N and quality of service (QoS) information of the relay terminal. The remote terminal can identify the role of the relay terminal (the intermediate relay or the anchor relay) by using the first information, and determine whether to select the relay terminal, thus realizing selection of the relay terminal in a multi-hop relay scenario.

It should be noted that the relay information transmission method provided in this embodiment of this application may be performed by a relay information transmission apparatus, or a control module that is in the relay information transmission apparatus and that is configured to perform the relay information transmission method. In this embodiment of this application, that the relay information transmission apparatus performs the relay information transmission method is used as an example to describe the relay information transmission apparatus provided in this embodiment of this application.

As shown in FIG 7, an embodiment of this application further provides a relay information transmission apparatus 700, including:
a second transceiver module 701, configured to send first information, where
the first information includes at least one of following:
   a relay hop count N of the first relay terminal, where N represents an N^{th} hop of the first relay terminal in a relay link, and N is a positive integer; and
   quality of service (QoS) information.

Optionally, the apparatus in this embodiment of this application further includes a determining module, configured to determine first information.

Optionally, the QoS information includes at least one of following:
delay information between the first relay terminal and an anchor user plane function (UPF);
packet error rate information between the first relay terminal and an anchor UPF;
packet loss rate information between the first relay terminal and an anchor UPF;
guaranteed bit rate information between the first relay terminal and an anchor UPF; and
maximal bit rate information between the first relay terminal and an anchor UPF.

Optionally, the apparatus in this embodiment of this application further includes:
a third transceiver module, configured to: before the second transceiver module sends the first information, receive first information from a second relay terminal, where the second relay terminal includes a relay terminal corresponding to an N1 hop before the first relay terminal, and N1 is a positive integer greater than or equal to 1; and
a second processing module, configured to perform a first operation based on the first information of the second relay terminal; where
the first operation includes at least one of following:
   increasing the relay hop count of the first relay terminal by 1; and
   updating the QoS information of the first relay terminal.

Optionally, the second processing module is configured to perform at least one of following:
performing round-trip time measurement through the relay link and the anchor UPF, and updating a delay value in the QoS information based on a measurement result; and
performing target QoS parameter measurement through the relay link and the anchor UPF, and updating a target QoS parameter in the QoS information based on a measurement result, where the target QoS parameter includes at least one of a packet error rate and a packet loss rate.

Optionally, the second processing module is configured to: in a case of determining, based on third information and the first information of the second relay terminal, the first relay terminal as a next hop relay of the second relay terminal, perform the first operation, where
the third information is used to indicate a relay discovery termination condition, and the third information is configured or pre-configured by a network side for the first relay terminal.

Optionally, the third information includes at least one of following:
a maximal relay hop count; and
a maximal QoS parameter value corresponding to the QoS information.

Optionally, a maximal QoS parameter value corresponding to the QoS information includes at least one of following:
information about a maximal tolerable delay between a relay terminal and an anchor UPF;
information about a maximal tolerable packet error rate between a relay terminal and an anchor UPF;
information about a maximal tolerable packet loss rate between a relay terminal and an anchor UPF;
information about a maximal tolerable guaranteed bit rate between a relay terminal and an anchor UPF; and
information about a maximal tolerable bit rate between a relay terminal and an anchor UPF.

Optionally, the third information is associated with at least one of following:
an application identifier or a service type; and
a relay service code.

Optionally, there are at least two pieces of first information, each of the pieces of first information corresponds to a second relay terminal, and each of the pieces of first information includes at least one second parameter, then
the second processing module includes:
a second selection submodule, configured to determine, based on second parameters respectively corresponding to all pieces of first information, a second target relay terminal corresponding to a second target minimum parameter, where the second target minimum parameter is a second parameter with a minimum parameter value among a plurality of the second parameters; and
a second processing submodule, configured to perform the first operation based on the first information of the second target relay terminal, where
the second target minimum parameter includes at least one of following:
   a minimum relay hop count; and
   a minimum delay between the relay terminal and the anchor UPF.

Optionally, the second processing module is configured to: in a case that the first relay terminal determines, based on the third information and the first information of the second relay terminal, the first relay terminal as a next hop relay of the second relay terminal, and the third information is associated with at least one of a target application identifier, a target service type, and a target relay service code, perform the first operation.

In this embodiment of this application, the first relay terminal sends the first information, so that the remote terminal can identify the role of the first relay terminal (the anchor relay or the intermediate relay) based on the first information, and determine whether to select the relay terminal. In addition, other relay terminals can determine whether to perform a next hop relay role of the first relay terminal based on the first information of the first relay terminal.

The relay selection apparatus or the relay information transmission apparatus in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), a teller machine, or a self-service machine. This is not specifically limited in the embodiments of this application.

The apparatus provided in this embodiment of this application can implement the processes implemented in the method embodiments from FIG 2 to FIG 5, and a same technical effect can be achieved. To avoid repetition, details are not described herein again.

Optionally, as shown in FIG 8, an embodiment of this application further provides a communications device 800, including a processor 801, a memory 802, and a program or an instruction stored in the memory 802 and executable on the processor 801. For example, in a case that the communications device 800 is a remote terminal, when the program or the instruction is executed by the processor 801, each process of the relay selection method embodiment applied to the remote terminal is implemented, and a same technical effect can be achieved. When the communications device 800 is a relay terminal, the program or the instruction is executed by the processor 801 to implement the processes of the foregoing relay information transmission method embodiment applied to the relay terminal, and a same technical effect can be achieved. To avoid repetition, details are not described herein again.

An embodiment of this application further provides a terminal, including a processor and a communications interface, where the communications interface is used to: receive first information sent by a relay terminal, where the first information includes at least one of a relay hop count N and quality of service (QoS) information of the relay terminal, N represents an N^{th} hop of the relay terminal in a relay link, and N is a positive integer; and the processor is configured to perform relay terminal selection based on the first information.

An embodiment of this application further provides a terminal, including a processor and a communications interface, where the communications interface is configured to send first information; and
the first information includes at least one of following:
a relay hop count N of the first relay terminal, where N represents an N^{th} hop of the first relay terminal in a relay link, and N is a positive integer; and
quality of service (QoS) information.

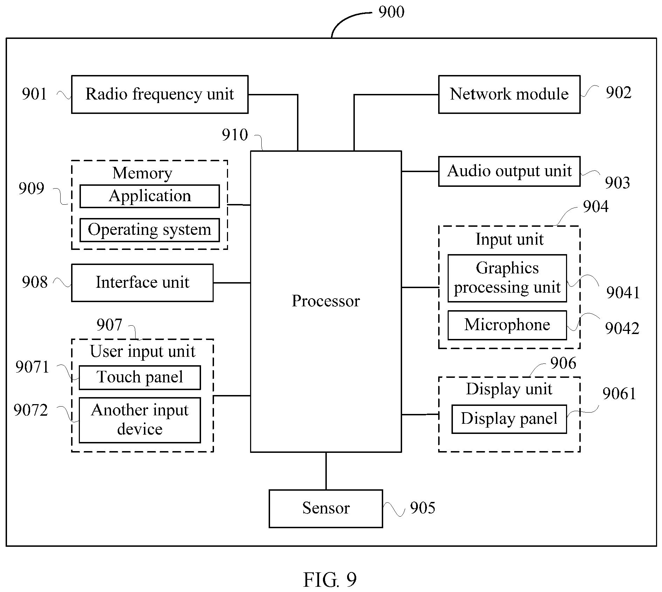

The terminal embodiment is corresponding to the relay selection method embodiment or the relay information transmission method embodiment, each implementation process and implementation of the method embodiment can be applied to the terminal embodiment, and a same technical effect can be achieved. Specifically, FIG 9 is a schematic diagram of a hardware structure of a terminal for implementing embodiments of this application. The terminal 900 includes but is not limited to at least part of components such as a radio frequency unit 901, a network module 902, an audio output unit 903, an input unit 904, a sensor 905, a display unit 906, a user input unit 907, an interface unit 908, a memory 909, and a processor 910.

A person skilled in the art can understand that the terminal 900 may further include a power supply (such as a battery) that supplies power to each component. The power supply may be logically connected to the processor 910 by using a power supply management system, to implement functions such as charging and discharging management, and power consumption management by using the power supply management system. The terminal structure shown in FIG 9 constitutes no limitation on the terminal, and the terminal may include more or fewer components than those shown in the figure, or combine some components, or have different component arrangements. Details are not described herein.

It should be understood that, in this embodiment of this application, the input unit 904 may include a graphics processing unit (Graphics Processing Unit, GPU) 9041 and a microphone 9042, and the graphics processing unit 9041 processes image data of a still picture or a video obtained by an image capture apparatus (such as a camera) in a video capture mode or an image capture mode. The display unit 906 may include a display panel 9061. Optionally, the display panel 9061 may be configured in a form such as a liquid crystal display or an organic light-emitting diode. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In this embodiment of this application, the radio frequency unit 901 receives downlink data from a network side device and then sends the downlink data to the processor 910 for processing; and sends uplink data to the network side device. Usually, the radio frequency unit 901 includes but is not limited to an antenna, at least one amplifier, a transceiver, a coupler, a low noise amplifier, a duplexer, and the like.

The memory 909 may be configured to store a software program or an instruction and various data. The memory 909 may mainly include a program or instruction storage area and a data storage area. The program or instruction storage area may store an operating system, and an application or an instruction required by at least one function (for example, a sound playing function or an image playing function). In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 910 may include one or more processing units. Optionally, an application processor and a modem processor may be integrated into the processor 910. The application processor mainly processes an operating system, a user interface, an application, an instruction, or the like. The modem processor mainly processes wireless communication, for example, a baseband processor. It can be understood that, alternatively, the modem processor may not be integrated into the processor 910.

In an embodiment, the terminal 900 is a remote terminal, and the radio frequency unit 901 is configured to receive first information sent by a relay terminal, where the first information includes at least one of a relay hop count N and quality of service (QoS) information of the relay terminal, N represents an N^{th} hop of the relay terminal in a relay link, and N is a positive integer; and the processor 910 is configured to perform relay terminal selection based on the first information.

Optionally, the QoS information includes at least one of following:
delay information between the relay terminal and an anchor user plane function (UPF);
packet error rate information between the relay terminal and an anchor UPF;
packet loss rate information between the relay terminal and an anchor UPF;
guaranteed bit rate information between the relay terminal and an anchor UPF; and
maximal bit rate information between the relay terminal and an anchor UPF.

Optionally, there are at least two pieces of first information, each of the pieces of first information corresponds to a relay terminal, and each of the pieces of first information includes at least one first parameter, then;
the processor 910 is configured to determine, based on first parameters respectively corresponding to all pieces of first information, a target relay terminal corresponding to a first target minimum parameter, where the first target minimum parameter is a first parameter with a minimum parameter value among a plurality of the first parameters, where
the first target minimum parameter includes at least one of following:
   a minimum relay hop count; and
   a minimum delay between the relay terminal and the anchor UPF.

Optionally, the processor 910 is configured to perform relay terminal selection based on the first information and second information, and the second information is used to indicate a selection condition of the relay terminal, where
the second information is configured or pre-configured by a network side for the remote terminal.

Optionally, the second information includes at least one of following:
a maximal relay hop count, where the maximal relay hop count is a maximal hop count corresponding to a relay terminal that is able to be accepted by the remote terminal; and
a maximal QoS parameter value corresponding to the QoS information.

Optionally, the processor 910 is configured to perform at least one of following:
in a case that the second information includes the maximal relay hop count, selecting a relay terminal that sends first target information, where the first target information is first information that meets a first condition, and the first condition is that the relay hop count N in the first information is less than or equal to the maximal relay hop count; and
in a case that the second information includes the maximal QoS parameter value, selecting a relay terminal that sends second target information, where the second target information is first information that meets a second condition, and the second condition is that the QoS parameter value in the first information is less than or equal to the maximal QoS parameter value.

Optionally, a maximal QoS parameter value corresponding to the QoS information includes at least one of following:
information about a maximal tolerable delay of the remote terminal;
information about a maximal tolerable packet error rate of the remote terminal;
information about a maximal tolerable packet loss rate of the remote terminal;
information about a maximal tolerable guaranteed bit rate of the remote terminal; and
information about a maximal tolerable bit rate of the remote terminal.

Optionally, the second information is associated with at least one of following:
an application identifier or a service type; and
a relay service code.

Optionally, the processor 910 is configured to: in a case that the second information is associated with at least one of a target application identifier, a target service type, and a target relay service code, perform relay terminal selection based on the first information and the second information.

In another embodiment, the terminal 900 is a first relay terminal, and the radio frequency unit 901 is configured to send first information; and
the first information includes at least one of following:
a relay hop count N of the first relay terminal, where N represents an N^{th} hop of the first relay terminal in a relay link, and N is a positive integer; and
quality of service (QoS) information.

Optionally, the QoS information includes at least one of following:
delay information between the first relay terminal and an anchor user plane function (UPF);
packet error rate information between the first relay terminal and an anchor UPF;
packet loss rate information between the first relay terminal and an anchor UPF;
guaranteed bit rate information between the first relay terminal and an anchor UPF; and
maximal bit rate information between the first relay terminal and an anchor UPF.

Optionally, the radio frequency unit 901 is configured to: before sending the first information, receive first information from a second relay terminal, where the second relay terminal includes a relay terminal corresponding to an N1 hop before the first relay terminal, and N1 is a positive integer greater than or equal to 1; and the processor 910 is configured to perform a first operation based on the first information of the second relay terminal; where the first operation includes at least one of following:
increasing the relay hop count of the first relay terminal by 1; and
updating the QoS information of the first relay terminal.

Optionally, the processor 910 is configured to perform at least one of following:
performing, by the first relay terminal, round-trip time measurement through the relay link and the anchor UPF, and updating a delay value in the QoS information based on a measurement result; and
performing, by the first relay terminal, target QoS parameter measurement through the relay link and the anchor UPF, and updating a target QoS parameter in the QoS information based on a measurement result, where the target QoS parameter includes at least one of a packet error rate and a packet loss rate.

Optionally, the processor 910 is configured to: in a case of determining, based on third information and the first information of the second relay terminal, the first relay terminal as a next hop relay of the second relay terminal, perform the first operation, where
the third information is used to indicate a relay discovery termination condition, and the third information is configured or pre-configured by a network side for the first relay terminal.

Optionally, the third information includes at least one of following:
a maximal relay hop count; and
a maximal QoS parameter value corresponding to the QoS information.

Optionally, a maximal QoS parameter value corresponding to the QoS information includes at least one of following:
information about a maximal tolerable delay between a relay terminal and an anchor UPF;
information about a maximal tolerable packet error rate between a relay terminal and an anchor UPF;
information about a maximal tolerable packet loss rate between a relay terminal and an anchor UPF;
information about a maximal tolerable guaranteed bit rate between a relay terminal and an anchor UPF; and
information about a maximal tolerable bit rate between a relay terminal and an anchor UPF.

Optionally, the third information is associated with at least one of following:
an application identifier or a service type; and
a relay service code.

Optionally, there are at least two pieces of first information, each of the pieces of first information corresponds to a second relay terminal, and each of the pieces of first information includes at least one second parameter, then
the processor 910 is configured to: determine, based on second parameters respectively corresponding to all pieces of first information, a second target relay terminal corresponding to a second target minimum parameter, where the second target minimum parameter is a second parameter with a minimum parameter value among a plurality of the second parameters; and perform the first operation based on the first information of the second target relay terminal, where
the second target minimum parameter includes at least one of following:
   a minimum relay hop count; and
   a minimum delay between the relay terminal and the anchor UPF.

Optionally, the processor 910 is configured to: in a case that the first relay terminal determines, based on the third information and the first information of the second relay terminal, the first relay terminal as a next hop relay of the second relay terminal, and the third information is associated with at least one of a target application identifier, a target service type, and a target relay service code, perform the first operation.

In this embodiment of this application, the first relay terminal sends the first information, so that the remote terminal can identify the role of the first relay terminal (the anchor relay or the intermediate relay) based on the first information, and determine whether to select the relay terminal. In addition, other relay terminals can determine whether to perform a next hop relay role of the first relay terminal based on the first information of the first relay terminal.

An embodiment of this application further provides a readable storage medium. The readable storage medium stores a program or an instruction, and when the program or the instruction is executed by a processor, the processes of the foregoing relay selection method embodiment or the relay information transmission method embodiment are implemented, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the relay selection method embodiment or the relay information transmission method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product is stored in a non-transitory storage medium, and the computer program product is executed by at least one processor to implement the processes of the relay selection method embodiment or the relay information transmission method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A relay selection method, comprising:
receiving, by a remote terminal, first information sent by a relay terminal, wherein the first information comprises at least one of a relay hop count N and quality of service (QoS) information of the relay terminal, N represents an N^{th} hop of the relay terminal in a relay link, and N is a positive integer; and
performing, by the remote terminal, relay terminal selection based on the first information.

2. The method according to claim 1, wherein the QoS information comprises at least one of following:
delay information between the relay terminal and an anchor user plane function (UPF);
packet error rate information between the relay terminal and an anchor UPF;
packet loss rate information between the relay terminal and an anchor UPF;
guaranteed bit rate information between the relay terminal and an anchor UPF; and
maximal bit rate information between the relay terminal and an anchor UPF.

3. The method according to claim 1 or 2, wherein there are at least two pieces of first information, each of the pieces of first information corresponds to a relay terminal, and each of the pieces of first information comprises at least one first parameter, then;
the performing, by the remote terminal, relay terminal selection based on the first information comprises:
determining, by the remote terminal based on first parameters respectively corresponding to all pieces of first information, a target relay terminal corresponding to a first target minimum parameter, wherein the first target minimum parameter is a first parameter with a minimum parameter value among a plurality of the first parameters, wherein
the first target minimum parameter comprises at least one of following:
a minimum relay hop count; and
a minimum delay between the relay terminal and the anchor UPF.

4. The method according to claim 1, wherein the performing, by the remote terminal, relay terminal selection based on the first information comprises:
performing, by the remote terminal, relay terminal selection based on the first information and second information, wherein the second information is used to indicate a selection condition of the relay terminal, wherein
the second information is configured or pre-configured by a network side for the remote terminal.

5. The method according to claim 4, wherein the second information comprises at least one of following:
a maximal relay hop count, wherein the maximal relay hop count is a maximal hop count corresponding to a relay terminal that is able to be accepted by the remote terminal; and
a maximal QoS parameter value corresponding to the QoS information.

6. The method according to claim 5, wherein the performing relay terminal selection based on the first information and second information comprises at least one of following:
in a case that the second information comprises the maximal relay hop count, selecting a relay terminal that sends first target information, wherein the first target information is first information that meets a first condition, and the first condition is that the relay hop count N in the first information is less than or equal to the maximal relay hop count; and
in a case that the second information comprises the maximal QoS parameter value, selecting a relay terminal that sends second target information, wherein the second target information is first information that meets a second condition, and the second condition is that the QoS parameter value in the first information is less than or equal to the maximal QoS parameter value.

7. The method according to claim 5, wherein the maximal QoS parameter value comprises at least one of following:
information about a maximal tolerable delay of the remote terminal;
information about a maximal tolerable packet error rate of the remote terminal;
information about a maximal tolerable packet loss rate of the remote terminal;
information about a maximal tolerable guaranteed bit rate of the remote terminal; and
information about a maximal tolerable bit rate of the remote terminal.

8. The method according to claim 4, wherein the performing, by the remote terminal, relay terminal selection based on the first information and second information comprises:
in a case that the second information is associated with at least one of a target application identifier, a target service type, and a target relay service code, performing, by the remote terminal, relay terminal selection based on the first information and the second information.

9. A relay information transmission method, comprising:
sending, by a first relay terminal, first information, wherein
the first information comprises at least one of following:
a relay hop count N of the first relay terminal, wherein N represents an N^{th} hop of the first relay terminal in a relay link, and N is a positive integer; and
quality of service (QoS) information.

10. The method according to claim 9, wherein the QoS information comprises at least one of following:
delay information between the first relay terminal and an anchor user plane function (UPF);
packet error rate information between the first relay terminal and an anchor UPF;
packet loss rate information between the first relay terminal and an anchor UPF;
guaranteed bit rate information between the first relay terminal and an anchor UPF; and
maximal bit rate information between the first relay terminal and an anchor UPF.

11. The method according to claim 9, wherein before the sending, by a first relay terminal, first information, the method further comprises:
receiving first information from a second relay terminal, wherein the second relay terminal comprises a relay terminal corresponding to an N1 hop before the first relay terminal, and N1 is a positive integer greater than or equal to 1; and
performing, by the first relay terminal, a first operation based on the first information of the second relay terminal, wherein
the first operation comprises at least one of following:
increasing the relay hop count of the first relay terminal by 1; and
updating the QoS information of the first relay terminal.

12. The method according to claim 11, wherein the updating the QoS information comprises at least one of following:
performing, by the first relay terminal, round-trip time measurement through the relay link and the anchor UPF, and updating a delay value in the QoS information based on a measurement result; and
performing, by the first relay terminal, target QoS parameter measurement through the relay link and the anchor UPF, and updating a target QoS parameter in the QoS information based on a measurement result, wherein the target QoS parameter comprises at least one of a packet error rate and a packet loss rate.

13. The method according to claim 11, wherein the performing, by the first relay terminal, a first operation based on the first information of the second relay terminal comprises:
in a case that the first relay terminal determines, based on third information and the first information of the second relay terminal, the first relay terminal as a next hop relay of the second relay terminal, performing, by the first relay terminal, the first operation, wherein
the third information is used to indicate a relay discovery termination condition, and the third information is configured or pre-configured by a network side for the first relay terminal.

14. The method according to claim 13, wherein the third information comprises at least one of following:
a maximal relay hop count; and
a maximal QoS parameter value corresponding to the QoS information.

15. The method according to claim 14, wherein the maximal QoS parameter value comprises at least one of following:
information about a maximal tolerable delay between a relay terminal and an anchor UPF;
information about a maximal tolerable packet error rate between a relay terminal and an anchor UPF;
information about a maximal tolerable packet loss rate between a relay terminal and an anchor UPF;
information about a maximal tolerable guaranteed bit rate between a relay terminal and an anchor UPF; and
information about a maximal tolerable bit rate between a relay terminal and an anchor UPF.

16. The method according to claim 11, wherein there are at least two pieces of first information, each of the pieces of first information corresponds to a second relay terminal, and each of the pieces of first information comprises at least one second parameter, then
the performing, by the first relay terminal, a first operation based on the first information of the second relay terminal comprises:
determining, by the first relay terminal based on second parameters respectively corresponding to all pieces of first information, a second target relay terminal corresponding to a second target minimum parameter, wherein the second target minimum parameter is a second parameter with a minimum parameter value among a plurality of the second parameters; and
performing, by the first relay terminal, the first operation based on the first information of the second target relay terminal, wherein
the second target minimum parameter comprises at least one of following:
a minimum relay hop count; and
a minimum delay between the relay terminal and the anchor UPF.

17. The method according to claim 13, wherein in a case that the first relay terminal determines, based on third information and the first information of the second relay terminal, the first relay terminal as a next hop relay of the second relay terminal, the performing, by the first relay terminal, the first operation comprises:
in a case that the first relay terminal determines, based on the third information and the first information of the second relay terminal, the first relay terminal as a next hop relay of the second relay terminal, and the third information is associated with at least one of a target application identifier, a target service type, and a target relay service code, performing, by the first relay terminal, the first operation.

18. A relay selection apparatus, applied to a remote terminal and comprising:
a first transceiver module, configured to receive first information sent by a relay terminal, wherein the first information comprises at least one of a relay hop count N and quality of service (QoS) information of the relay terminal, N represents an N^{th} hop of the relay terminal in a relay link, and N is a positive integer; and
a first processing module, configured to perform relay terminal selection based on the first information.

19. The apparatus according to claim 18, wherein the QoS information comprises at least one of following:
delay information between the relay terminal and an anchor user plane function (UPF);
packet error rate information between the relay terminal and an anchor UPF;
packet loss rate information between the relay terminal and an anchor UPF;
guaranteed bit rate information between the relay terminal and an anchor UPF; and
maximal bit rate information between the relay terminal and an anchor UPF.

20. The apparatus according to claim 18 or 19, wherein there are at least two pieces of first information, each of the pieces of first information corresponds to a relay terminal, and each of the pieces of first information comprises at least one first parameter, then;
the first processing module comprises:
a first selection submodule, configured to determine, based on first parameters respectively corresponding to all pieces of first information, a target relay terminal corresponding to a first target minimum parameter, wherein the first target minimum parameter is a first parameter with a minimum parameter value among a plurality of the first parameters, wherein
the first target minimum parameter comprises at least one of following:
a minimum relay hop count; and
a minimum delay between the relay terminal and the anchor UPF.

21. The apparatus according to claim 18, wherein the first processing module is configured to perform relay terminal selection based on the first information and second information, and the second information is used to indicate a selection condition of the relay terminal, wherein
the second information is configured or pre-configured by a network side for the remote terminal.

22. The apparatus according to claim 21, wherein the second information comprises at least one of following:
a maximal relay hop count, wherein the maximal relay hop count is a maximal hop count corresponding to a relay terminal that is able to be accepted by the remote terminal; and
a maximal QoS parameter value corresponding to the QoS information.

23. The apparatus according to claim 22, wherein the first processing module is configured to perform at least one of following:
in a case that the second information comprises the maximal relay hop count, selecting a relay terminal that sends first target information, wherein the first target information is first information that meets a first condition, and the first condition is that the relay hop count N in the first information is less than or equal to the maximal relay hop count; and
in a case that the second information comprises the maximal QoS parameter value, selecting a relay terminal that sends second target information, wherein the second target information is first information that meets a second condition, and the second condition is that the QoS parameter value in the first information is less than or equal to the maximal QoS parameter value.

24. The apparatus according to claim 22, wherein the maximal QoS parameter value comprises at least one of following:
information about a maximal tolerable delay of the remote terminal;
information about a maximal tolerable packet error rate of the remote terminal;
information about a maximal tolerable packet loss rate of the remote terminal;
information about a maximal tolerable guaranteed bit rate of the remote terminal; and
information about a maximal tolerable bit rate of the remote terminal.

25. The apparatus according to claim 21, wherein the first processing module is configured to: in a case that the second information is associated with at least one of a target application identifier, a target service type, and a target relay service code, perform relay terminal selection based on the first information and the second information.

26. A relay information transmission apparatus, applied to a first relay terminal and comprising:
a second transceiver module, configured to send first information, wherein
the first information comprises at least one of following:
a relay hop count N of the first relay terminal, wherein N represents an N^{th} hop of the first relay terminal in a relay link, and N is a positive integer; and
quality of service (QoS) information.

27. The apparatus according to claim 26, wherein the QoS information comprises at least one of followings:
delay information between the first relay terminal and an anchor user plane function (UPF);
packet error rate information between the first relay terminal and an anchor UPF;
packet loss rate information between the first relay terminal and an anchor UPF;
guaranteed bit rate information between the first relay terminal and an anchor UPF; and
maximal bit rate information between the first relay terminal and an anchor UPF.

28. The apparatus of claim 26, further comprising:
a third transceiver module, configured to: before the second transceiver module sends the first information, receive first information from a second relay terminal, wherein the second relay terminal comprises a relay terminal corresponding to an N1 hop before the first relay terminal, and N1 is a positive integer greater than or equal to 1; and
a second processing module, configured to perform a first operation based on the first information of the second relay terminal; wherein
the first operation comprises at least one of following:
increasing the relay hop count of the first relay terminal by 1; and
updating the QoS information of the first relay terminal.

29. The apparatus according to claim 28, wherein the second processing module is configured to perform at least one of following:
performing round-trip time measurement through the relay link and the anchor UPF, and updating a delay value in the QoS information based on a measurement result; and
performing target QoS parameter measurement through the relay link and the anchor UPF, and updating a target QoS parameter in the QoS information based on a measurement result, wherein the target QoS parameter comprises at least one of a packet error rate and a packet loss rate.

30. The apparatus according to claim 28, wherein the second processing module is configured to: in a case of determining, based on third information and the first information of the second relay terminal, the first relay terminal as a next hop relay of the second relay terminal, perform the first operation, wherein
the third information is used to indicate a relay discovery termination condition, and the third information is configured or pre-configured by a network side for the first relay terminal.

31. The apparatus according to claim 30, wherein the third information comprises at least one of following:
a maximal relay hop count; and
a maximal QoS parameter value corresponding to the QoS information.

32. The apparatus according to claim 31, wherein the maximal QoS parameter value comprises at least one of following:
information about a maximal tolerable delay between a relay terminal and an anchor UPF;
information about a maximal tolerable packet error rate between a relay terminal and an anchor UPF;
information about a maximal tolerable packet loss rate between a relay terminal and an anchor UPF;
information about a maximal tolerable guaranteed bit rate between a relay terminal and an anchor UPF; and
information about a maximal tolerable bit rate between a relay terminal and an anchor UPF.

33. The apparatus according to claim 28, wherein there are at least two pieces of first information, each of the pieces of first information corresponds to a second relay terminal, and each of the pieces of first information comprises at least one second parameter, then
the second processing module comprises:
a second selection submodule, configured to determine, based on second parameters respectively corresponding to all pieces of first information, a second target relay terminal corresponding to a second target minimum parameter, wherein the second target minimum parameter is a second parameter with a minimum parameter value among a plurality of the second parameters; and
a second processing submodule, configured to perform the first operation based on the first information of the second target relay terminal, wherein
the second target minimum parameter comprises at least one of following:
a minimum relay hop count; and
a minimum delay between the relay terminal and the anchor UPF.

34. The apparatus according to claim 30, wherein the second processing module is configured to: in a case that the first relay terminal determines, based on the third information and the first information of the second relay terminal, the first relay terminal as a next hop relay of the second relay terminal, and the third information is associated with at least one of a target application identifier, a target service type, and a target relay service code, perform the first operation.

35. A terminal, comprising a processor, a memory, and a program or an instruction stored in the memory and executable on the processor, wherein when the program or the instruction is executed by the processor, steps of the relay selection method according to any one of claims 1 to 8 or steps of the relay information transmission method according to any one of claims 9 to 17 are implemented.

36. A readable storage medium, wherein the readable storage medium stores a program or an instruction, and when the program or the instruction is executed by a processor, steps of the relay selection method according to any one of claims 1 to 8 or steps of the relay information transmission method according to any one of claims 9 to 17 are implemented.

37. A chip, comprising a processor and a communications interface, wherein the communications interface is coupled to the processor, and the processor is configured to run a program or an instruction to implement steps of the relay selection method according to any one of claims 1 to 8 or steps of the relay information transmission method according to any one of claims 9 to 17.

38. A computer program product, wherein the program product is stored in a non-transitory storage medium, and the program product is executed by at least one processor to implement steps of the relay selection method according to any one of claims 1 to 8 or steps of the relay information transmission method according to any one of claims 9 to 17.

39. A communications device, configured to perform the relay selection method according to any one of claims 1 to 8 or the relay information transmission method according to any one of claims 9 to 17.
